# EUROPEAN PATENT APPLICATION

(11) **EP 0 932 321 A2**
(43) Date of publication of application: **28.07.1999**
(21) Application number: 99101220.4
(22) Date of filing: 22.01.1999
(51) Int. Cl.: H04Q 11/04

(54) **Method and apparatus for selectively discarding ATM cells**

(30) Priority: 22.01.1998 JP 2408098
(71) Applicant: NEC CORPORATION, Tokyo (JP)
(72) Inventor: Manabe, Masao, Minato-ku, Tokyo (JP)
(74) Representative: Baronetzky, Klaus, Dipl.-Ing.

(57) **Abstract**

There is disclosed a selective ATM cell discard control, in which an ATM layer 1 receiving ATM cells belonging to a plurality of different packets 1 to 4, and determines to discard a cell belonging to a specified packet, and then, notifies to a physical layer a header information stored in the ATM cell belonging to the specified packet. A physical layer 2 compares a heater of a received cell with the header information from the ATM layer, cell by cell, and discards the cell having the notified header information. Thus, an at-random property of cell loss is suppressed, thereby to prevent confusion of a network.

## Description

### Background of the Invention

### Field of the Invention

The present invention relates to an ATM (Asynchronous Tranfer Mode) communication system for , and more specifically, to a technology for discarding an ATM cell which is generated because of a loss of an ATM cell in a congested condition, in order to prevent a confusion of a network.

### Description of related art

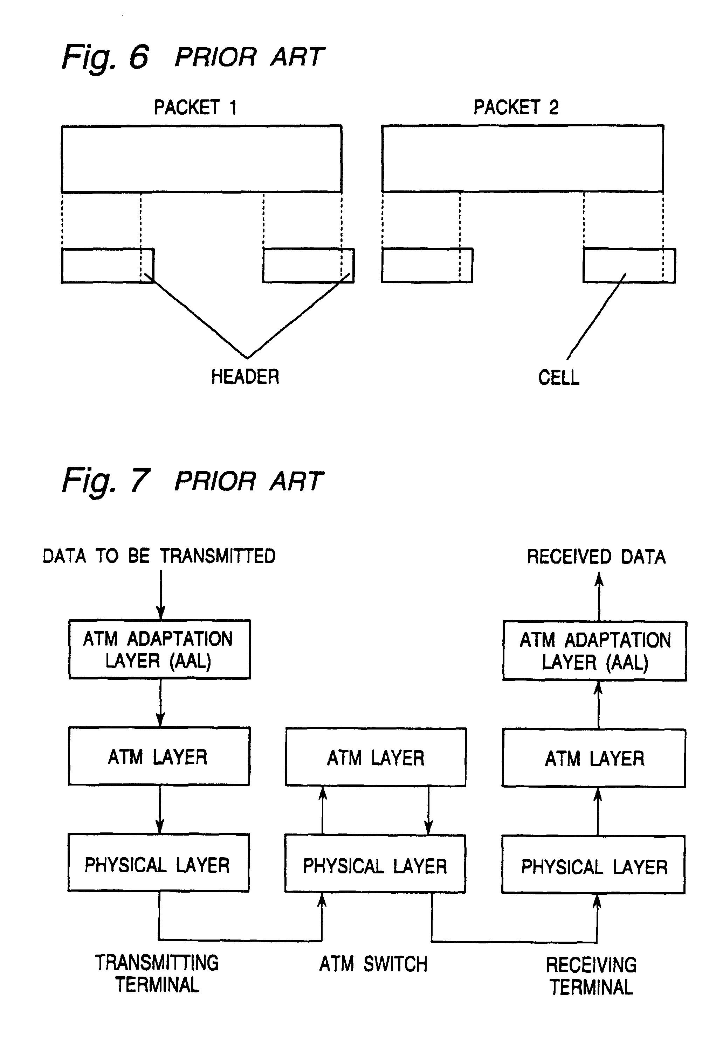

In accordance with the ATM protocol, in a transmitting terminal apparatus, a packet data (data + control information) is divided (and if necessary, control information is added), and stored in a payload of 48 bytes, and then, a header of 5 bytes is added to form an ATM cell, so that the packet data is transferred in units of ATM cell. In a receiving terminal apparatus, the packet data is regenerated from the received ATM cells. Fig. 6 illustrates this relation between the packet data and the ATM cells.

Fig. 7 is a diagram illustrating an ATM protocol structure in the ATM machine. As shown in Fig. 7, each of the transmitting terminal apparatus and the receiving terminal apparatus includes a physical layer, an ATM layer and an ATM adaptation layer (AAL), and an ATM switch includes a physical layer and an ATM layer. The physical layer includes a converting function between the ATM cell and an electric signal of a communication line, and the ATM layer has a transfer control function (translation function of VPI/PCI, etc.) of the ATM cell. The ATM adaptation layer (AAL) includes a conversion control function between the packet data and the ATM cell.

Each of the transmitting terminal apparatus, the receiving terminal apparatus and the ATM switch includes at least the physical layer and the ATM layer, similarly to each other. But, each is constituted of a combination of independent LSI circuit blocks individually corresponding to the respective layers. For example, the ATM switch is constituted of independent physical LSI devices and switch devices (ATM layer and switch function), and each of the terminal apparatuses includes physical LSI devices and SAR devices (ATM layer, AAL, and the other functions).

The control of the ATM cells is conducted in the ATM layer or in an upper layer superior to the ATM layer, and the physical layer includes the function of a transfer control of the ATM cell, generation and sending of an empty cell (idle cell) for replenishing a shortage of the number of ATM cells to be sent, and for controlling a band, a reception of the cells from a transmission channel, and a discarding of the idle cell. Whether or not the ATM cell is the idle cell, is discriminated from the header information of the ATM cell.

As mentioned above, in the ATM communication, the packet data to be transmitted is divided into ATM cells, which are transmitted, and an original packet is regenerated from the received ATM cells in the receiving side. Therefore, if only one of the cells which constitute one packet, is lost between the transmitting side and the receiving side, it is no longer possible to regenerate the original packet. If the packet is not received, the ATM protocol does not require a re-sending of the packet data, but a software operating on the ATM protocol requires the re-sending of the packet data. Therefore, it is reported that, when an IP packet is transferred in the ATM mode as in the TCP/IP on the ATM, the transmission rate often becomes slower than that of the IP transfer in units of an ordinary packet.

The reason of this is that: If the network is congested with the result that some number of cells are lost, the re-sending of the packet having a lost cell is requested, and if the re-sending is actually conducted, the network is further congested. In other words, the start of the re-sending results in an increased possibility of the cell being lost, so that the regeneration of a further larger number of packets become impossible, and therefore, a further increased number of the re-sending requests are dispatched, with an effective transfer capability of the system become near to zero because of the congestion of the network. Because the information is divided into a some number of parts and the divided parts are transmitted, it increases the risk that the transfer of the information becomes difficult. In order to prevent the confusion of the network caused because of the lost cell as mentioned above, it has been proposed to discard a cell in unit of packet (Packet Discard) when the ATM cell is lost.

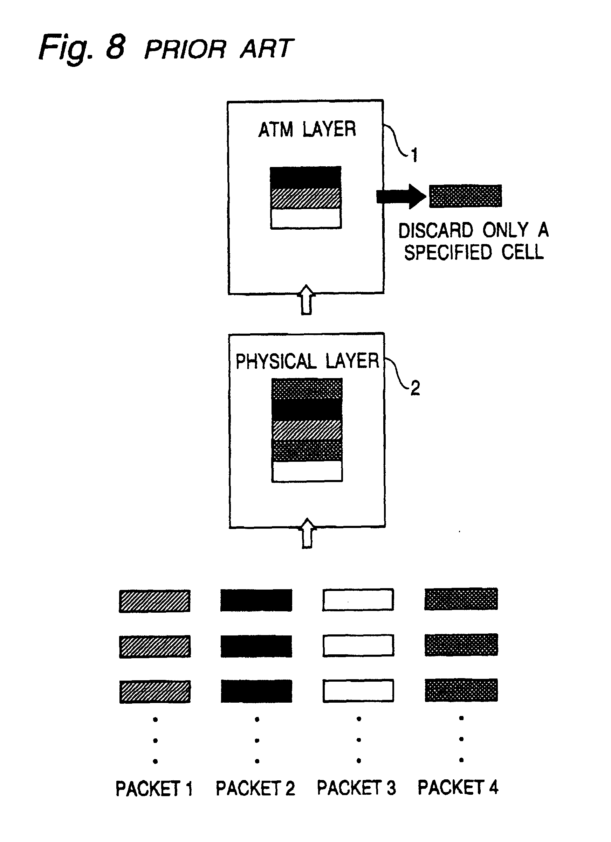

Fig. 8 is a diagram illustrating the cell discarding in units of packet. The physical layer receives the cells included in all the packets, and sends all the received cells to the ATM layer. In the congested condition, the ATM layer is the first to discard the cell in units of packet, in order to increase the number of regenerateable packets and therefore to elevate the effective transfer capability by suppressing the generation of the request of the re-sending, thereby to control the congestion.

For the above mentioned cell discarding in units of packet (Packet Discard) in an upper layer such as the ATM layer, PPD (Partial Packet Discard) and EPD (Early Packet Discard) are proposed. In the PPD, if the packet having even one cell lost is found out, the cells belonging to the packet in question are discarded thereafter. In the EPD, a threshold for writing the received cells into a receiving FIFO memory is set in the receiving FIFO memory, and if the received cells exceed the threshold, the cells belonging to the packet being received at that moment and/or the cells belonging to a packet newly received after that moment, are discarded. These cell discarding in units of packet are implemented in an LSI or software of an upper layer.

The cell discarding in units of packet is effective when the loss of the cell occurs in units of packet. However, when the loss of the cell occurs at random, such as the loss of cells caused because of a simple overflow in a cell receiving processing at the physical layer or the ATM layer, even if the number of lost cells is the same, the number of discarded packets increases.

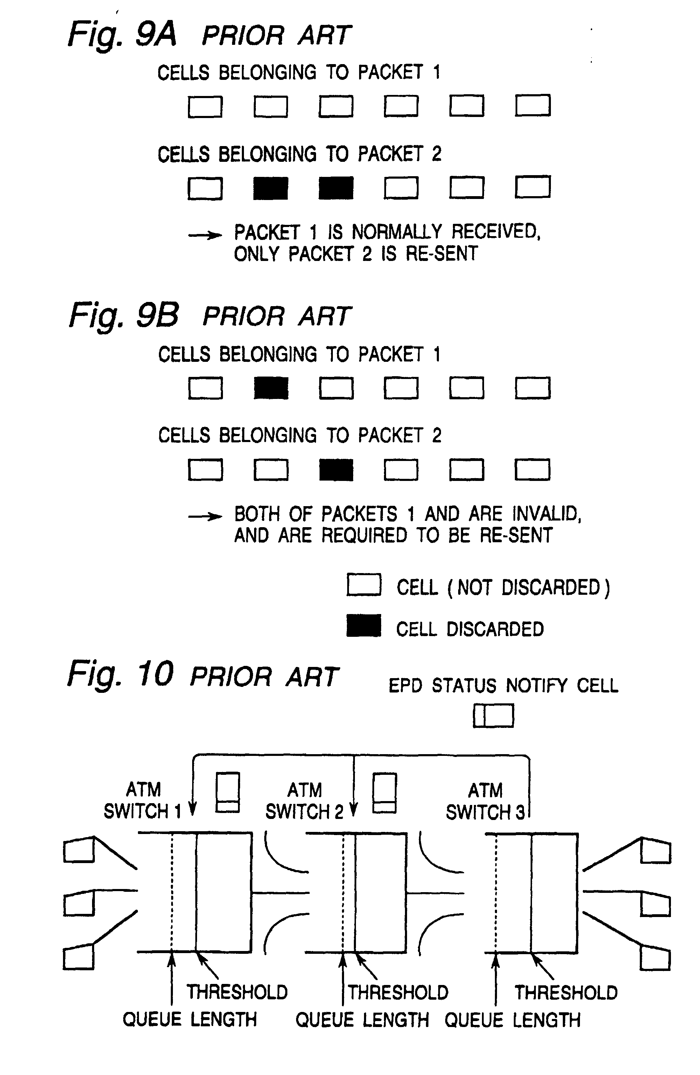

Figs. 9A and 9B are diagrams illustrating the cell discarding in units of packet in different situations. Fig. 9A shows the case in which a plurality of cells belonging to the same packet are lost. In this case, the discarded packet is one packet. Fig. 9B shows the case in which a plurality of cells belonging to different packets, respectively, are lost at random. In this case, a plurality of packets are discarded. Namely, if the cell lost situation is different, the number of discarded packets is different.

In the prior art, for example, Japanese Patent Application Pre-examination Publication No. JP-A-09-261244, (an English abstract of JP-A-09-261244 is available from the Japanese Patent Office and the content of the English abstract of JP-A-09-261244 is incorporated by reference in its entirety into this application) proposes an ATM communication network configured to systematically conduct the control of a cell selective discarding in the ATM switch.

Fig. 10 is a diagram illustrating the construction of the ATM communication network disclosed in JP-A-09-261244. This ATM communication network includes a plurality of cascade-connected ATM switches each composed of the physical layer and the ATM layer. If a cell is discarded because of congestion at an ATM switch positioned downstream of a cell flow, the cells transferred by an ATM positioned upstream of the cell flow are invalidated in part. Since the transfer of these wasteful cell lowers the throughput of the ATM switch, in the shown ATM communication network an ATM switch 3 positioned downstream of the cell flow notifies generation of the discarding of the cell to upstream ATM switches 1 and 2, and in respond to the notification, each of the ATM switches 1 and 2 stops to transfer a corresponding cell to the downstream ATM switch 3.

Alternatively, Japanese Patent Application Pre-examination Publication No. JP-A-07-327038 and its corresponding US Patent 5663948 (the content of which is incorporated by reference in its entirety into this application) proposes to a buffer management method configured to control the cell discarding in the physical layer of the ATM switch and the like. When an overflow occurs in the physical layer, if a circuit is initialized as in the prior art, since data of a FIFO memory will be lost, this buffer management method is featured at least to ensure the data stored in the FIFO memory. For this purpose, without discriminating the degree of importance of data before the data is transferred to the processing section of the ATM layer, a write address of the FIFO memory is updated to a heading address of a received cell data being currently written, so that only the data to be written into the FIFO memory of the physical layer is discarded.

As mentioned above, when some number of cells are lost in the ATM layer or an upper layer superior to the ATM layer because of congestion or others, it becomes impossible to conduct a normal processing such as a transfer control based on the received cell or a regeneration of the packet data. In order to prevent this inconvenience, it is proposed to conduct the selective cell discard control in which the cell is discarded in units of packet in the ATM layer so as to protect a receivable packet, with the result that even if the number of lost cells is the same, it is possible to increase the number of regenerateable packets and therefore the effective transfer capability by suppressing the re-sending. This prior art procedure of the selective cell discard is considered to be a function of the ATM layer or an upper layer superior to the ATM layer in the protocol.

In some cases, however, the loss of the cell is attributable to the overflows in a buffer circuit such as a FIFO memory in the physical layer and the ATM layer. Generally, it is considered that since the physical layer only restores the ATM cell on the basis of signals from a communication line, the physical layer can conduct a high speed processing, however, since the ATM layer controls the transfer, the operating speed of the ATM layer is relatively low, so that the ATM layer becomes a bottleneck and therefore, the loss of cells occurs. However, there is a case that, because of the capacity of the FIFO memory the physical layer becomes a bottleneck, and therefore, the loss of cells occurs in the physical layer. For example, the overflow occurs in the physical layer when the cell receiving processing becomes short in the physical layer with the result that the overflow occurs, or when the processing speed of the ATM layer is not satisfactory and therefore requests the physical layer to stop the sending of the cells, with the result that the physical layer cannot send the cells to the ATM layer. The loss of cell in these situations occurs at random, and therefore, even if the selective cell discard control is conducted in the ATM layer, the loss of cell becomes a cause of a significant confusion in the network.

The ATM communication network disclosed in JP-A-09-261244 carries out the cell discard control in a plurality of ATM switches each composed of the physical layer and the ATM layer, thereby to prevent the throughput of the ATM switches. However, the ATM switch in this ATM communication network is similar to the prior art in that the cell discard control is conducted in the ATM layer. In addition, by discarding the cell at an upstream of the cell flow, the cell flow is indiscriminately stopped in all the downstream ATM switches, with the result that the throughput is not necessarily elevated in the whole of the ATM communication network.

On the other hand, the buffer management method disclosed in JP-A-07-327038 and US Patent 5663948 carries out the cell discard control in the physical layer of the ATM switch. This buffer management method only ensures the data stored in the FIFO memory when the overflow occurs in the physical layer, and therefore, does not discard the cell in units of packet. Therefore, it is impossible to prevent the confusion of the network caused of the congestion mentioned above.

### Summary of the Invention

Accordingly, it is an object of the present invention to provide selective ATM cell discard control method and apparatus which have overcome the above mentioned defect of the conventional one.

Another object of the present invention is to provide selective ATM cell discard control method and apparatus capable of suppressing an at-random property of cell loss, thereby to prevent confusion of a network.

The above and other objects of the present invention are achieved in accordance with the present invention by a method for selectively discarding an ATM cell on an ATM protocol having a physical layer and an upper layer superior to the physical layer, wherein on the basis of a selective packet discarding information notified from the upper layer, the physical layer discards from received ATM cells an ATM cell belonging to the packet to be discarded.

When an accumulating amount of a receiving buffer in the physical layer exceeds a threshold, or when the processing of the upper layer becomes short, the upper layer starts the control of the notification of the selective packet discarding information to the physical layer. In addition, the selective packet discarding information is a VPI/VCI information of the ATM cell belonging to the packet which cannot be regenerated in the upper layer. Alternatively, when an ATM cell accumulating amount of a receiving buffer in the upper layer exceeds the threshold, the selective packet discarding information is a VPI/VCI information of the ATM cell belonging to the packet which is received at that moment or after that moment.

Furthermore, in the ATM cell selectively discarding method wherein on the basis of the selective packet discarding information notified from the upper layer, the physical layer discards from received ATM cells an ATM cell belonging to the packet to be discarded, when there occurs a packet which is unnecessary on a software in the upper layer, the selective packet discarding information is a VPI/VCI information of the ATM cell belonging to the packet.

According to another aspect of the present invention, there is provided a physical layer apparatus having a buffer for sending an ATM cell received from a communication line, to an ATM layer apparatus, wherein on the basis of a selective packet discarding information notified from the ATM layer apparatus or an upper layer superior to the ATM layer apparatus, an ATM cell belonging to the packet to be discarded is discarded.

The physical layer apparatus further includes a pattern table storing the selective packet discarding information, wherein the ATM cell is discarded by referring to the pattern table when the buffer is written.

In addition, the physical layer apparatus discards the ATM cell by referring to the pattern table even when the buffer is read out. The selective packet discarding information is a VPI/VCI information.

With the above mentioned arrangement, the cell discarding conducted in the ATM layer in the prior art for controlling the congestion is conducted even in the physical layer, so that the overflow of the buffer is prevented in the physical layer and in the ATM layer. In addition, the at-random property of the cell loss is suppressed, so that the performance of the overall network is elevated, and the confusion of the network is prevented.

The above and other objects, features and advantages of the present invention will be apparent from the following description of preferred embodiments of the invention with reference to the accompanying drawings.

### Brief Description of the Drawings

Fig. 1 is a block diagram of an embodiment of the selective cell discarding method and apparatus in accordance with the present invention;
Figs. 2A and 2B illustrate a concrete example of the embodiment in accordance with the present invention;
Fig. 3 is a diagram illustrating a concrete construction of the physical layer in the embodiment in accordance with the present invention;
Fig. 4 is a diagram illustrating a cell discard control between the physical layer and the ATM layer in the embodiment in accordance with the present invention;
Fig. 5 is a diagram illustrating a cell discard control between the physical layer, the ATM layer and an upper layer in the embodiment in accordance with the present invention;
Fig. 6 is a diagram illustrating the relation between the packet data and the ATM cell in the ATM communication;
Fig. 7 is a diagram illustrating the ATM protocol structure;
Fig. 8 is a diagram illustrating the ATM cell discard control in units of packet in the prior art;
Figs. 9A and 9B are diagrams illustrating the relation between the loss of the ATM cell and the discarding of the packet; and
Fig. 10 is a diagram illustrating the prior art ATM communication network.

### Description of the Preferred embodiments

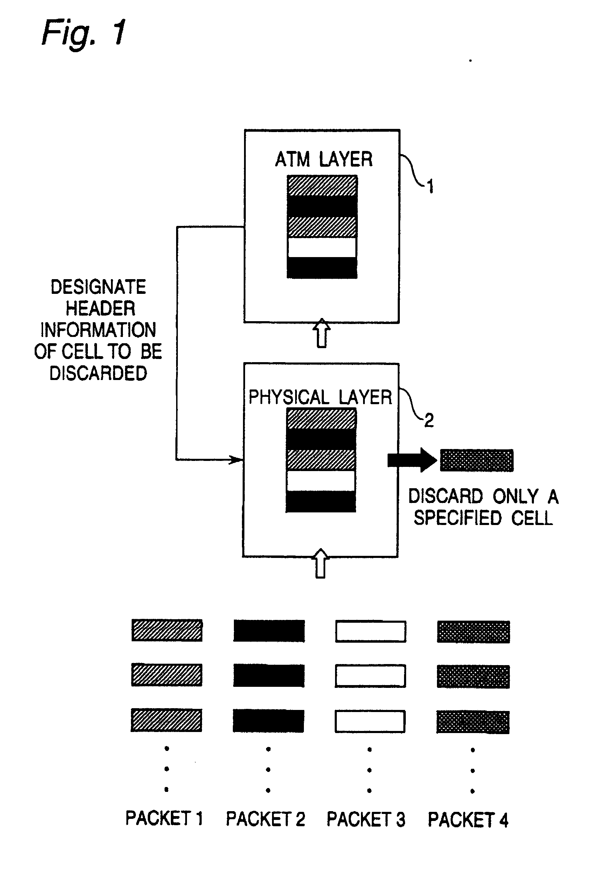

Referring to Figure 1, there is shown a block diagram of an embodiment of the selective cell discarding method and apparatus in accordance with the present invention. The shown embodiment includes a physical layer and an ATM layer, and the ATM layer has a construction o notifying a header information of a cell to be discarded, to the physical layer as a selective cell discard information.

The ATM layer 1 receives ATM cells belonging to a plurality of different packets "PACKET 1" to "PACKET 4", and determines to discard an ATM cell belonging to a specified packet, and then, notifies to the physical layer 2 a header information stored in the ATM cell corresponding to the specified packet. The physical layer 2 compares a heater of a received cell with the header information from the ATM layer 1, cell by cell, and discards the cell having the notified header information in the physical layer 2.

The determination of the header information in the ATM layer can be conducted by a cell discarding algorithm such as PPD and EPD. For example, when a buffer overflow occurs in the ATM layer, the header information is determined to preferentially discard only the ATM cells belonging to a specified packet. Alternatively, the header information is determined to discard the ATM cells belonging to the packet which has been already found to have destroyed in part. Furthermore, since it is possible to discriminate from a VPI/VCI of the cell, whether or not the cell belongs to the packet to be discarded, a VPI/VCI pattern of the cell belonging to the packet to be discarded is notified to the physical layer as the header information.

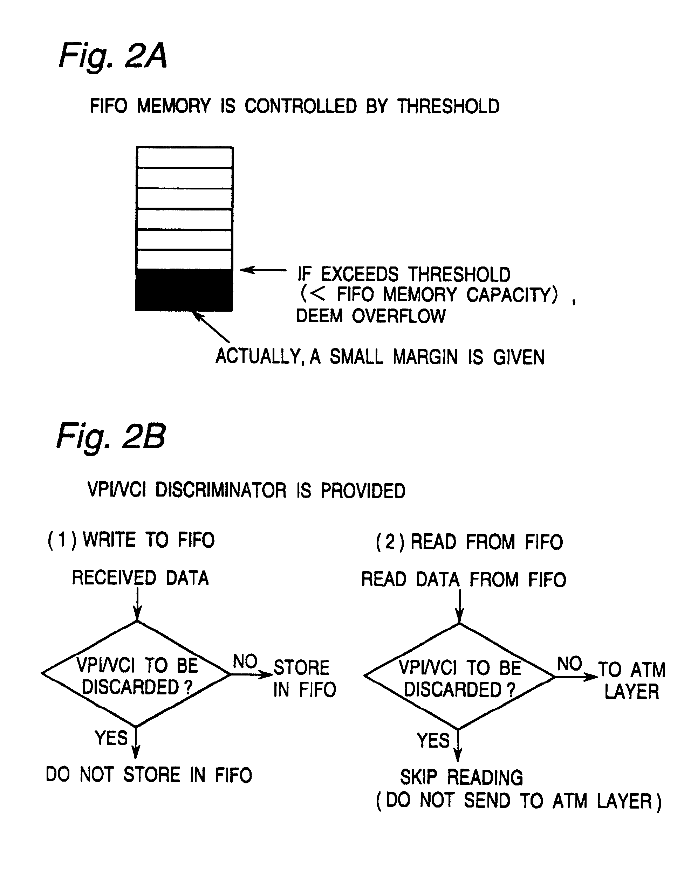

Now, a concrete example of the embodiment in accordance with the present invention will be described. Fig. 2A illustrates a FIFO memory provided in the physical layer and a cell writing control and a cell reading control. As shown in Fig. 2A, a memory capacity value is set to be smaller than the full memory capacity of the FIFO memory, so that the memory capacity value is used as a threshold recognizable when the stored amount reaches the memory capacity value. If the stored amount exceeds the memory capacity value, it is judged as the congested condition, so that an overflow condition is indicated. In addition, a small margin is ensured to be able to succeedingly store the cells which are not required to be discarded even if the overflow occurs.

Fig. 2B illustrates an operation of discarding the cell in the FIFO memory. As shown in (1) of Fig. 2B, the cell discarding can be conducted in only the writing operation to the FIFO memory, or alternatively, as shown in (2) of Fig. 2B, the cell discarding can be conducted in only the reading operation from the FIFO memory. For the cell discarding, a VPI/VCI discriminator is provided, so that the cell discarding is carried out in the writing operation in such a manner that when the data is received, the VPI/VCI of the received data is compared with the VPI/VCI of the cell to be discarded, notified from the ATM layer, and when both are coincident, the writing to the FIFO is not conducted, and when both are not coincident, the writing to the FIFO is conducted. The reading operation of the FIFO memory is carried out at an operating time of the ATM layer. Here, the cell discarding in the writing operation is indispensable, and the cell discarding in the operation for reading the cell form the FIFO is optional.

In the case that the cell is discarded in the operation for reading the cell form the FIFO, the data is read out from the FIFO memory, and the VPI/VCI of the read-out data is compared with the VPI/VCI of the cell to be discarded, notified from the ATM layer, and when both are coincident, the reading is skipped so that the read-out cell is not sent to the ATM layer, and when both are not coincident, the read-out cell is sent to the ATM layer.

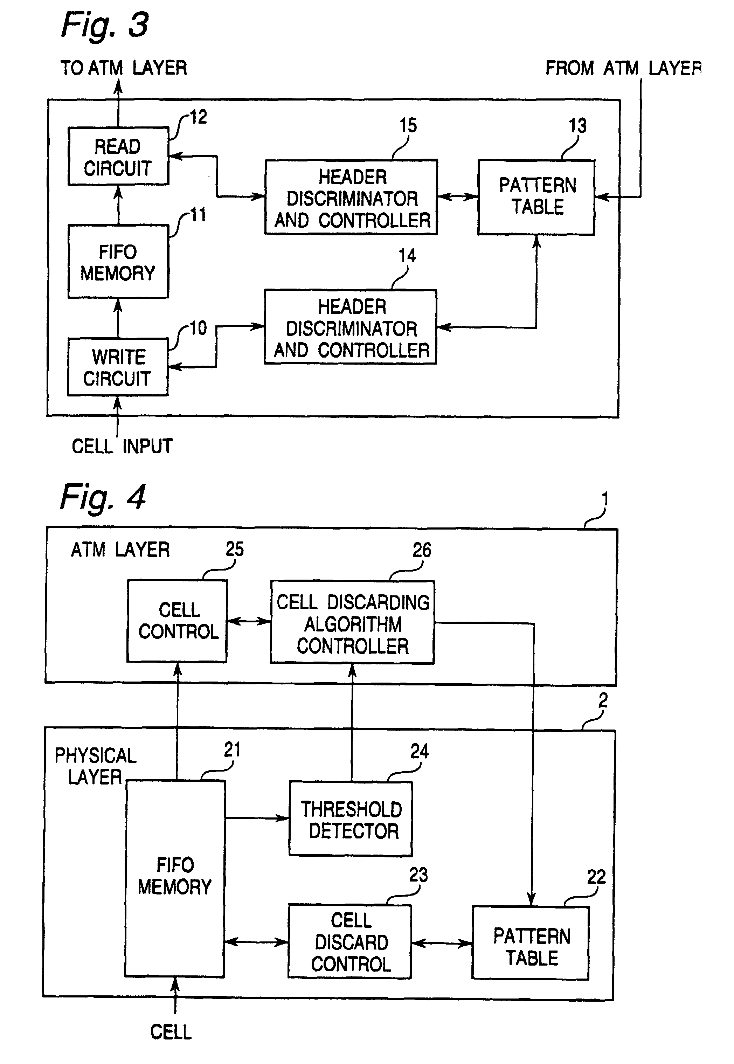

Fig. 3 is a diagram illustrating a concrete construction concerning the write and read operations of the FIFO memory, of the physical layer in the embodiment in accordance with the present invention. The shown physical layer includes a FIFO memory writing and reading circuit composed of a FIFO memory 11, a write circuit 10 receiving a cell from a communication line for writing the received cell into the FIFO memory 11, and a read circuit 12 reading the cell from the FIFO memory 11 for sending the read-out cell to the ATM layer. The shown physical layer also includes a pattern table 13 for holding the VPI/VCI of the cell to be discarded, notified from the ATM layer, and header discriminating and controlling circuits 14 and 15 for detecting the header of the cell and comparing the detected header with the VPI/VCI pattern of the pattern table 13 so as to control the FIFO memory writing and reading circuit.

The pattern table 13 holds the VPI/VCI notified from the ATM layer, simply as the pattern. The header discriminating and controlling circuits 14 and 15 compare the VPI/VCI pattern of the header of the cell with the VPI/VCI pattern held in the pattern table 13, when the cell received from the communication line is written by the write circuit 10, and when the cell is read out from the FIFO memory 11, respectively, so that the above mentioned write and read control of the FIFO memory is executed. The cell discarding in the physical layer based on the simple header patter comparison can be considered to be comparable with a discarding of an idle cell which is an inherent function of the physical layer. As a result, the load of the ATM layer can be reduced.

In the above mentioned operation, if it is judged that the condition of the FIFO memory or the load of the processing has been reduced, the ATM layer or a upper layer superior to the ATM layer sends a canceling signal (or a canceling command) for canceling the notified VPI/VCI, so that the physical layer removes the VPI/VCI from the pattern table 13 in response to the canceling signal

By constructing to carry out the cell discarding in both of the write operation and the read operation, the discarding of the cell belonging to the packet which has been determined to be discarded in the ATM layer or the upper layer because of the cell loss, can be conducted for the cells stored in the FIFO memory in the physical layer, so that the cell discarding can be quickly carried out.

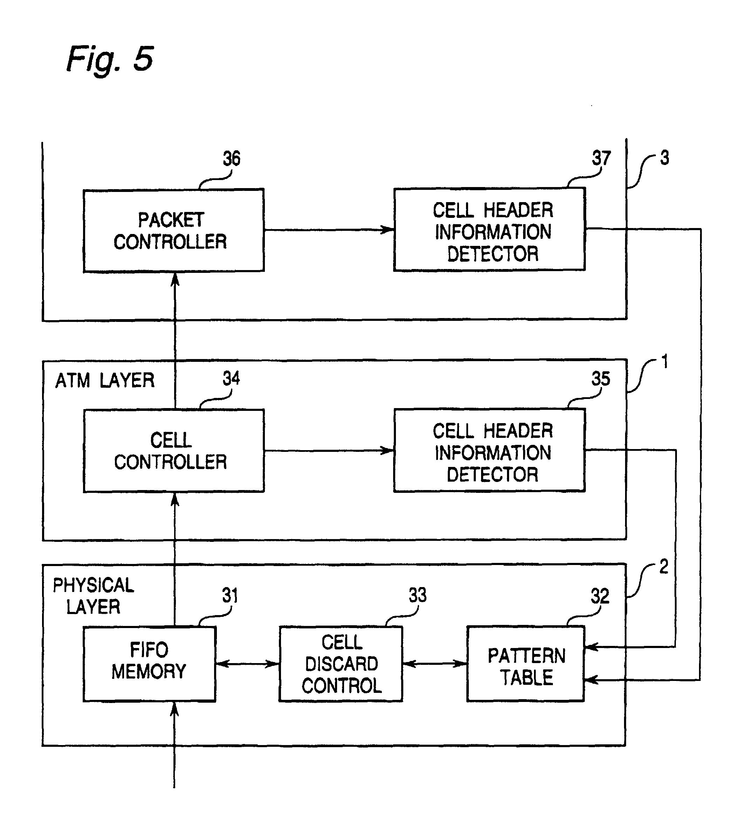

Figs. 4 and 5 show examples of setting the header information of the cell be discarded. Fig. 4 illustrates an example of generating the header information in the ATM layer when it is judged as the congested condition. The physical layer 2 includes a FIFO memory 21, a pattern table 22, a cell discard controller 23 and a threshold detector 24, and the ATM layer 1 includes a cell controller 25 having therein a cell discard algorithm controller 26.

The FIFO memory 21 sequentially writes the received cells, and sends the cell to the ATM layer 1 in the writing order. The threshold detector 24 detects that the amount of cells stored in the FIFO memory reaches a predetermine threshold, and notifies it to the cell discard algorithm controller 26. This cell discard algorithm controller 26 responds to the notification from the threshold detector 24 to start the algorithm of the selective cell discard control. Namely, if the cell discard algorithm controller 26 receives the notification from the threshold detector 24, the cell discard algorithm controller 26 outputs the VPI/VCI of a packet which is previously known to be not so important from the cell discarding algorithm such as EPD or PPD. This VPI/VCI is written into the pattern table 22. The cell discard controller 23 compares each of the received cells with the header infonnation stored in the pattern table 22, so as to control the writing and reading of the FIFO memory and to discard unnecessary cells. When the amount of cells stored in the FIFO memory becomes lower than the predetermine threshold, the threshold detector 24 detects it and notifies to the cell discard algorithm controller 26, which then controls the patter table 22 so as to remove the VPI/VCI from the pattern table 22. In this connection, it would be a matter of course to persons skilled in the art that the notification signal from the threshold detector 24 directly controls to remove the VPI/VCI from the pattern table 22.

Fig. 5 illustrates an example of setting the pattern table in the physical layer on the basis of the cell discarding algorithm such as EPD and PPD in the ATM layer or an upper layer superior to the ATM layer. In an ATM layer 36 and in an upper layer 3 superior to the ATM layer 1, cell header information detectors 35 and 37 are associated to a cell controller 34 and a packet controller 36, respectively, so that a discard cell header information is outputted from both or one of the cell header information detectors 35 and 37.

Regardless of the amount of cell stored in the FIFO memory of the physical layer, the cell header information detectors 35 and 37 detect the header information (VPI/VCI) on the basis of the lost cell or the packet which cannot be regenerated, which are detected in accordance with the EPD and PPD in the ATM layer or an upper layer superior to the ATM layer. The cell header information detectors 35 and 37 set the detected header information in a pattern table 32 of the physical layer 32.

In the physical layer 2, when a cell is written into a FIFO memory 31 or a cell is read out from the FIFO memory 31, a cell discard controller 33 conducts the cell discard control on the basis of the header information which is notified from the ATM layer or an upper layer superior to the ATM layer and which is stored in the pattern table 32.

In the above mentioned embodiments, the cell discard control is carried out in the physical layer. However, it would be a matter of course that, similarly to the prior art, the cell discard control can be conducted in the ATM layer on the basis of EPD or PPD.

As mentioned above, in the prior art, the at-random property exists in the cell discard and loss because of the overflow of the buffer (FIFO) in the physical layer and in the ATM layer. In the present invention, however, the cell discard is controlled so as to minimize the amount of discarded data and the amount of re-sent data, so that the performance of the overall network can be elevated, and the confusion of the network can be prevented.

According to the prevent invention, since the physical layer has a selective cell discard function for a congestion control, it is possible to avoid the overflow of the buffer in the physical layer, and to ensure a margin in the processing of each layer.

In particular, the ATM layer has a large processing load since the ATM layer analyzes the content of the cell header so as to control the transfer, but since the unnecessary ATM cells having the cell header information (VPI/VCI) notified to the physical layer are prevented from being supplied to the ATM layer, the load of the ATM layer is reduced. In addition, the overflow is prevented in both the physical layer and the ATM layer. This advantage is also true in an upper layer superior to the ATM layer. Furthermore, since only effective cells are sent to the ATM layer, the performance of the ATM layer can be elevated.

Further, according to the present invention, the cell discard is conducted in an internal device of the ATM switch or the like, but is not conducted in an upstream ATM switch in the flow of ATM cells. Therefore it is possible to minimize influence of the cell discard to other ATM switches in the ATM communication network, similarly to the cell discard control based on the cell discard algorithm such as EPD and PPD in the prior art, which are conducted in the ATM layer.

The invention has thus been shown and described with reference to the specific embodiments. However, it should be noted that the present invention is in no way limited to the details of the illustrated structures but changes and modifications may be made within the scope of the appended claims.

## Claims

1. A method for selectively discarding an ATM cell on an ATM protocol having a physical layer and an upper layer superior to the physical layer, wherein on the basis of a selective packet discarding information notified from said upper layer, said physical layer discards from received ATM cells an ATM cell belonging to the packet to be discarded.

2. A method claimed in Claim 1 wherein when an accumulating amount of a receiving buffer in said physical layer exceeds a threshold, or when the processing of said upper layer becomes short, said upper layer starts the control of the notification of said selective packet discarding information to said physical layer.

3. A method claimed in Claim 2 wherein said selective packet discarding information is a VPI/VCI information of the ATM cell belonging to the packet which cannot be regenerated in said upper layer.

4. A method claimed in Claim 2 wherein when an ATM cell accumulating amount of a receiving buffer in said upper layer exceeds said threshold, said selective packet discarding information is a VPI/VCI information of the ATM cell belonging to the packet which is received at that moment or after that moment.

5. A method claimed in Claim 2 wherein when there occurs a packet which is unnecessary on a software in said upper layer, said selective packet discarding information is a VPI/VCI information of the ATM cell belonging to said packet.

6. A physical layer apparatus having a buffer for sending an ATM cell received from a communication line, to an ATM layer apparatus, wherein on the basis of a selective packet discarding information notified from said ATM layer apparatus or an upper layer superior to said ATM layer apparatus, an ATM cell belonging to the packet to be discarded is discarded.

7. An apparatus claimed in Claim 6, further including a pattern table storing said selective packet discarding information, wherein said ATM cell is discarded by referring to said pattern table when said buffer is written.

8. An apparatus claimed in Claim 7, wherein said ATM cell is discarded by referring to said pattern table when said buffer is read out.

9. An apparatus claimed in any of Claims 6 to 8, wherein said selective packet discarding information is a VPI/VCI information.
